# EUROPEAN PATENT SPECIFICATION

(11) **EP 4 691 695 B1**
(45) Date of publication and mention of the grant of the patent: **18.11.2026**
(21) Application number: 25192355.3
(22) Date of filing: 29.07.2025
(51) Int. Cl.: B24B 39/04, B24B 53/12

(54) **FINISHING TOOL**
SCHLICHTWERKZEUG
OUTIL DE FINITION

(30) Priority: 08.08.2024 JP 2024131942
(43) Date of publication of application: 11.02.2026
(73) Proprietor: Sugino Machine Limited, Namerikawa City, Toyama 936-8577 (JP)
(72) Inventor: ISHITANI, Akihiro, Namerikawa City, Toyama 936-8577 (JP)
(74) Representative: Global IP Europe Patentanwaltskanzlei

(56) References cited:
- EP-A1- 3 804 889
- EP-A1- 4 166 263
- JP-A- 2017 205 827
- US-A- 2 791 211

## Description

### BACKGROUND

### 1. Technical Field

The present invention relates to a finishing tool.

### 2. Description of the Background

Conventionally, a finishing tool including a spherical machining surface is known (for example, JP 2006-187821 A1, hereinafter referred to as Patent Literature 1, or JP 2017-205827 A, referred to as Patent Literature 2 on which the preamble of claim 1 is based).

In the finishing tool, the machining surface is pressed against a workpiece. When a specific portion of the machining surface is used repeatedly, the surface eventually becomes worn or damaged, which results in roughened machining surface of the workpiece.

### BRIEF SUMMARY

The finishing tool of Patent Literature 1 is reversely mountable at both front and back, enabling machining at two positions. Firstly, a tool chip (e.g., diamond chip) is mounted to a chip holder with the front side facing outward, and a first portion of the tool chip is used for machining. When the first portion becomes worn or damaged, the tool chip is reversed and mounted with the back side facing outward, and a second portion of the tool chip is used for machining. Although this allows the tool chip to be used twice, there remains a need for more efficient use of such expensive tool chips.

An aspect of the present invention is to extend a service life of a chip

A first aspect of the present invention provides a finishing tool according to claim 1.

The finishing tool may be, for example, a dresser for grinding wheels or a mirror finishing tool.

The slide link may be, for example, a pin (slide pin) or a slide roller. The slide link protrudes from an outer circumferential surface of the chip holder. The slide link moves integrally with the chip holder. The slide link reciprocates within the slide groove.

The drive link may be, for example, a pin (drive pin) or a drive roller. The drive link protrudes from the outer circumferential surface of the chip holder. The drive link moves integrally with the chip holder. The drive link reciprocates within the drive groove.

The second elastic member is disposed on the shank. The second elastic member may urge the proximal end portion of the housing away from the shank.

According to the present invention, the service life of the tool chip is extended.

### BRIEF DESCRIPTION OF DRAWINGS

FIG. 1 is a cross-sectional view of a finishing tool according to an embodiment.
FIG. 2 is a view taken along arrow II in FIG. 1.
FIG. 3 is a sectional view taken along line III-III in FIG. 1.
FIG. 4 is a sectional view taken along line IV-IV in FIG. 1.
FIG. 5A is a developed view of outer circumferential surfaces of a slide sleeve and a drive sleeve according to the embodiment.
FIG. 5B is a developed view of outer circumferential surfaces of the slide sleeve and the drive sleeve.
FIG. 6 is a cam diagram according to the embodiment.

### DETAILED DESCRIPTION

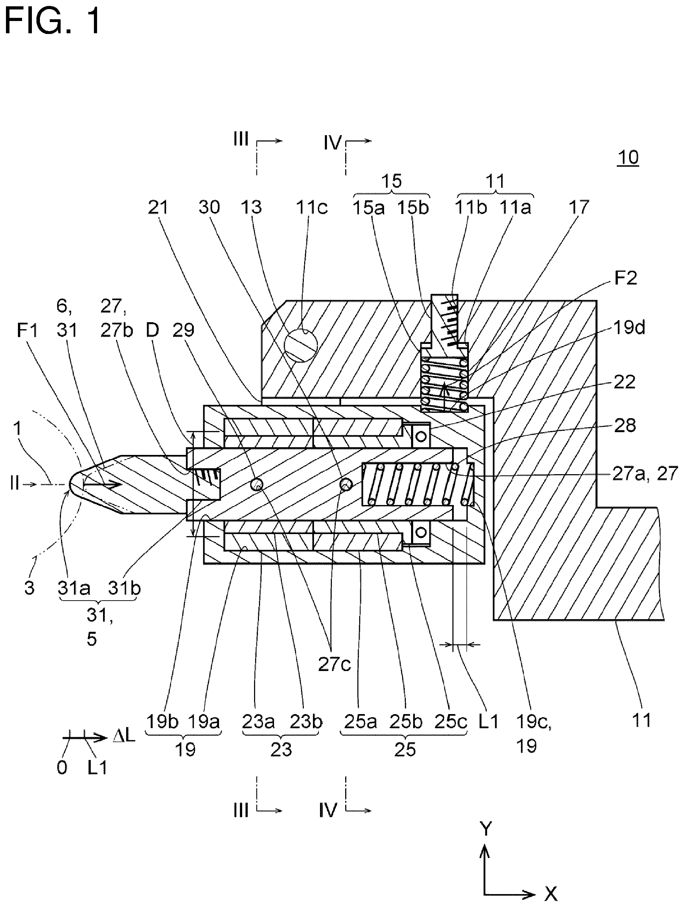

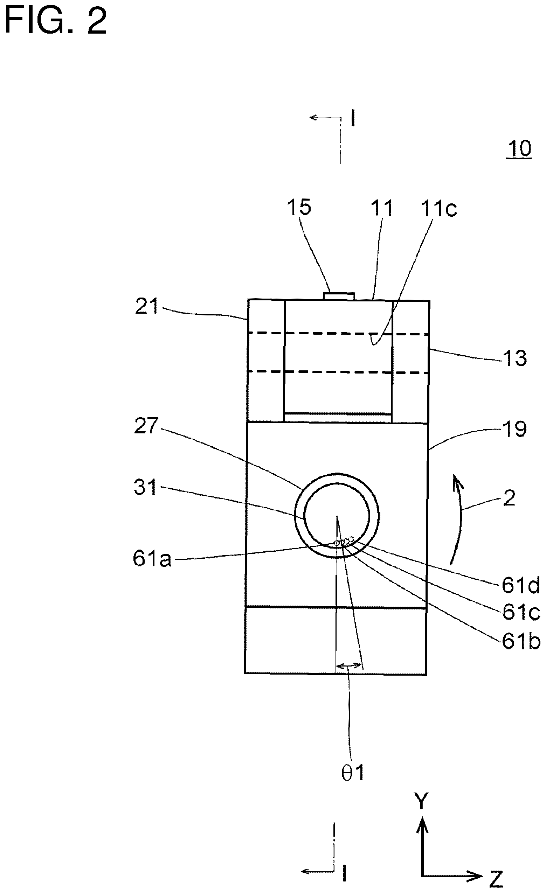

As shown in FIG. 1, a mirror finishing tool 10 according to an embodiment includes a shank 11, an adjustment plug 15, a spring (second elastic member) 17, a knuckle pin 13, a housing 19, a knuckle fitting 21, a first one-way clutch 23, a second one-way clutch 25, a thrust bearing 22, a chip holder 27, a slide pin (slide link) 29, a drive pin (drive link) 30, a spring (first elastic member) 28, and a tool chip 31. FIG. 1 is a sectional view taken along line I-I in FIG. 2.

The mirror finishing tool 10 is intended for use with a lathe. The mirror finishing tool 10 is mounted on a tool post in place of a cutting tool. The rightward direction in FIG. 1 is defined as +X direction. The upward direction in FIG. 1 is defined as +Y direction. The rightward direction in FIG. 2 is defined as +Z direction. For convenience, the -X direction is referred to as a distal end direction. The +X direction is referred to as a proximal end direction. The +Y direction is referred to as an upward direction.

As shown in FIG. 1, the shank 11 is crank-shaped as viewed in the Z direction. Preferably, a mounting portion for attaching to a lathe (not shown) is disposed on a central axis 1. The shank 11 has a rectangular cross-section. The shank 11 includes a pin hole 11c, a spring chamber 11a, and an adjustment female screw 11b. The pin hole 11c is located at the distal end portion of the shank 11. The pin hole 11c extends in the Z direction to penetrate through the shank 11. The spring chamber 11a and the adjustment female screw 11b are located at the proximal end side from the pin hole 11c. The spring chamber 11a and the adjustment female screw 11b extend in the Y direction. The spring chamber 11a and the adjustment female screw 11b are arranged coaxially. The spring chamber 11a opens downward from the shank 11. The adjustment female screw 11b extends upward from the spring chamber 11a to penetrate the shank 11. The adjustment female screw 11b has a smaller diameter than the spring chamber 11a.

The knuckle pin 13 is fixed in the pin hole 11c.

The housing 19, which has a rectangular cross-section, extends in the X direction. The housing 19 includes a holder chamber 19a, a cylinder hole 19b, a spring guide 19c, and a spring receiving surface 19d. The central axis 1 extends in the X direction. The holder chamber 19a, the cylinder hole 19b, and the spring guide 19c extend along the central axis 1. The cylinder hole 19b is a bottomed cylindrical hole. The cylinder hole 19b penetrates the holder chamber 19a to open at a distal end face of the housing 19. The holder chamber 19a is located at a central portion of the housing 19. The holder chamber 19a is a right cylindrical shape. The holder chamber 19a has a larger diameter than the cylinder hole 19b. The spring guide 19c is located at a proximal end portion of the cylinder hole 19b. The spring guide 19c is, for example, a cylindrical hole or a cylindrical shaft. The spring receiving surface 19d is located on an upper surface of the proximal end portion of the housing 19. The spring receiving surface 19d is a flat surface. The spring receiving surface 19d is, for example, a bottom surface of a cylindrical hole.

As shown in FIG. 1, a pair of knuckle fittings 21 are disposed near the distal end of the central portion of the housing 19. As shown in FIG. 2, the knuckle fittings 21 extend upward from the housing 19 so as to sandwich the shank 11. The knuckle pin 13 is inserted into the pin hole 11c to penetrate both the knuckle fittings 21 and the shank 11. The housing 19 is swingable about the knuckle pin 13.

As shown in FIG. 1, the adjustment plug 15 includes a contact portion 15a and an adjustment male thread 15b. The contact portion 15a has a disk shape. The contact portion 15a is disposed in the spring chamber 11a. The adjustment male thread 15b extends upward from the contact portion 15a. The adjustment male thread 15b is screwed into the adjustment female screw 11b. The pressing amount of the tool chip 31 is adjusted by advancing the adjustment plug 15.

The spring 17 is a compression coil spring. The spring 17 is mounted between the contact portion 15a and the spring receiving surface 19d. The spring 17 is guided by the spring chamber 11a. The spring 17 urges the proximal end portion of the housing 19 downward.

As shown in FIG. 1, the thrust bearing 22, the second one-way clutch 25, and the first one-way clutch 23 are sequentially arranged from the proximal end within the holder chamber 19a. The thrust bearing 22 abuts a proximal end surface of the holder chamber 19a.

The second one-way clutch 25 includes a second outer ring 25a, a drive sleeve 25b, and a flange 25c. An outer circumferential surface of the second outer ring 25a contacts an inner surface of the holder chamber 19a. The drive sleeve 25b rotates only in a first direction 2 (see FIG. 2) within the second outer ring 25a. An inner circumferential surface of the drive sleeve 25b slides in both rotational and axial directions relative to the chip holder 27. The flange 25c is disposed at the proximal end of the drive sleeve 25b. The flange 25c abuts the thrust bearing 22.

The first one-way clutch 23 includes a first outer ring 23a and a slide sleeve 23b. An outer circumferential surface of the first outer ring 23a is in contact with an inner surface of the holder chamber 19a. The slide sleeve 23b rotates only in the first direction 2 inside the first outer ring 23a. An inner circumferential surface of the slide sleeve 23b slides axially relative to the chip holder 27.

The chip holder 27 has a cylindrical shape. The chip holder 27 is supported in the holder chamber 19a via the slide sleeve 23b and the drive sleeve 25b. The chip holder 27 includes a spring chamber 27a, a female thread 27b, and a pair of pin holes 27c. The chip holder 27 reciprocates between a forward end 5 and a rearward end 6. Normally, the chip holder 27 is positioned at the forward end 5. A clearance having a length equal to or greater than a stroke L1 is formed between a proximal end surface of the chip holder 27 and a proximal end surface of the cylinder hole 19b. The spring chamber 27a is located at a proximal end portion of the chip holder 27 along the central axis 1. The female thread 27b is formed at the distal end of the chip holder 27. The pin holes 27c extend in the Z direction to penetrate the chip holder 27. The pair of pin holes 27c are aligned in the X direction.

The spring 28 is a compression coil spring. The spring 28 is mounted between the spring chamber 27a and the spring guide 19c. The spring 28 is guided by the spring chamber 27a and the spring guide 19c. The spring 28 urges the chip holder 27 toward the distal end.

The tool chip 31 includes a spherical surface 31a and a male thread 31b. The tool chip 31 is disposed at the distal end of the chip holder 27. The tool chip 31 is fastened to the chip holder 27 by the male thread 31b and the female thread 27b. The spherical surface 31a is positioned at the distal end and on the central axis 1 of the tool chip 31. The spherical surface 31a is made of diamond. The diamond may be, for example, a single-crystal diamond, a polycrystalline diamond, or a sintered body of diamond crystals.

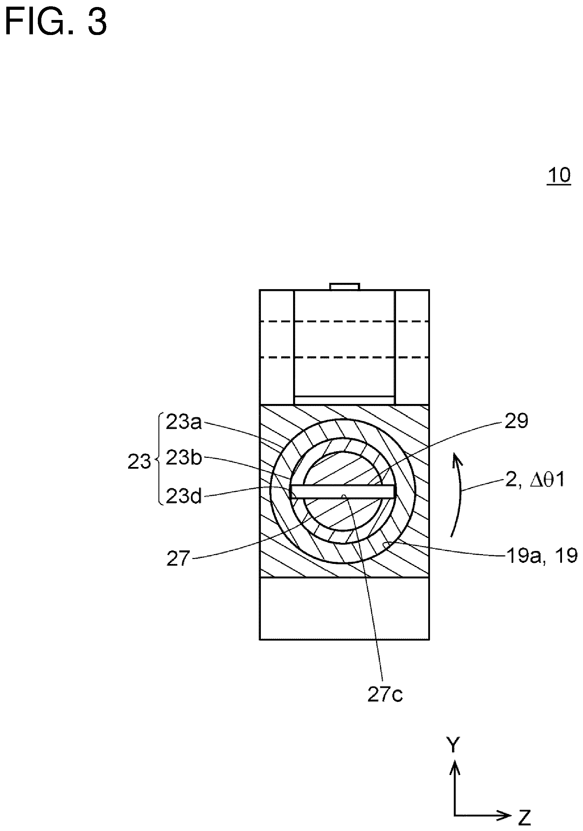

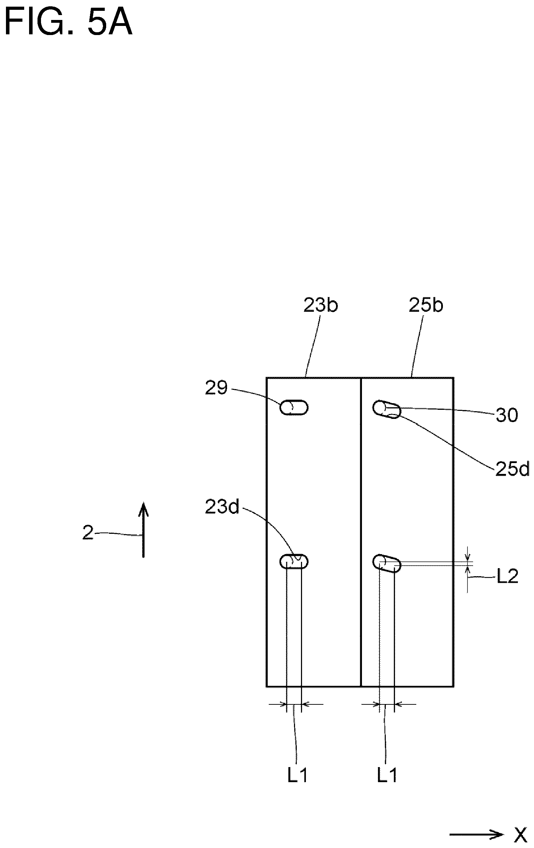

As shown in FIGS. 3 and 5A, the slide sleeve 23b includes a slide groove 23d. The slide groove 23d, which penetrates the slide sleeve 23b in the radial direction, extends in the X direction. The slide groove 23d extends parallel to the central axis 1. As shown in FIG. 5A, a width of the slide groove 23d is substantially equal to a diameter of the slide pin 29. A length of the slide groove 23d is equal to the stroke L1.

The slide pin 29 is a round bar. As shown in FIG. 3, the slide pin 29 penetrates the chip holder 27 to protrude from both sides of the chip holder 27. The slide pin 29 is disposed inside the slide groove 23d. The slide pin 29 is fixed to the pin holes 27c. The slide pin 29 slides axially inside the slide groove 23d.

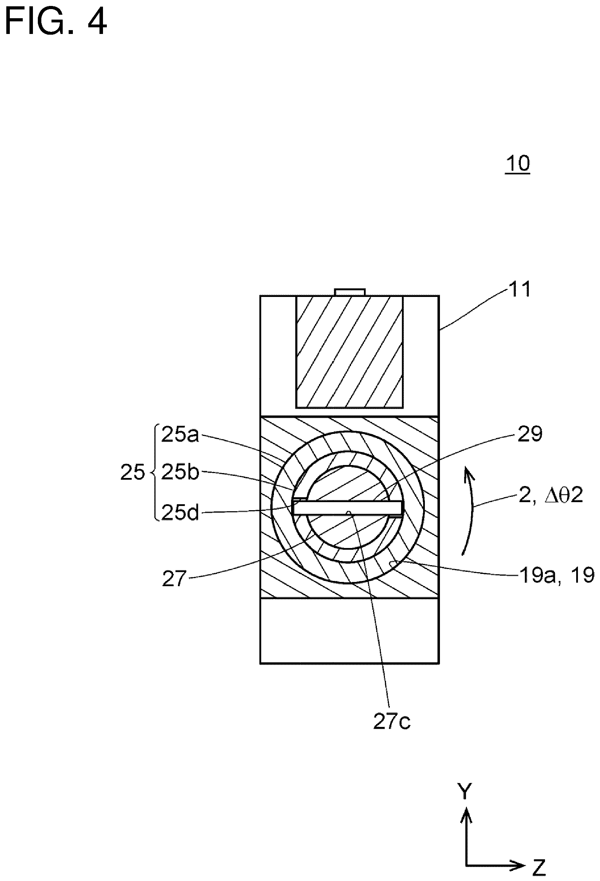

As shown in FIGS. 4 and 5A, the drive sleeve 25b includes a drive groove 25d. The drive groove 25d penetrates the drive sleeve 25b in the radial direction. The drive groove 25d extends helically. The drive groove 25d advances in the first direction 2 as it moves toward the distal end. As shown in FIG. 5A, a width of the drive groove 25d is substantially equal to a diameter of the drive pin 30. A length of the drive groove 25d in the X direction is equal to the stroke L1. The circumferential length L2 of the drive groove 25d is expressed by the following equation:$L 2 = \left(1/2\right) \times D \times θ$ Where:
L2: Circumferential stroke (mm) on the outer circumferential surface of the drive sleeve 25b
D: Outer diameter (mm) of the drive sleeve 25b
θ: Rotation angle (rad) of the chip holder 27 during one pressing operation

The drive pin 30 is disposed inside the drive groove 25d to slide within the drive groove 25d in both the axial and rotational directions. The other configurations of the drive pin 30 are substantially the same as those of the slide pin 29.

Referring to FIGS. 1, 5A, 5B, and 6, the operation and usage of the mirror finishing tool 10 will now be described.

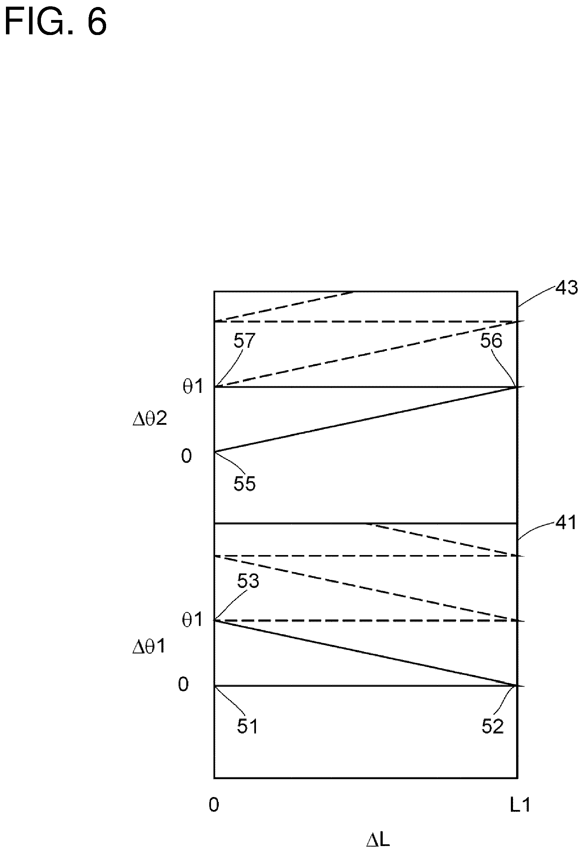

FIG. 6 shows a cam diagram 41 and a cam diagram 43. The cam diagram 41 represents a displacement angle Δθ1 (rad) of the slide sleeve 23b (see FIG. 3) with respect to an axial displacement ΔL (mm) of the slide pin 29 (see FIG. 1). The cam diagram 43 represents a displacement angle Δθ2 (rad) of the drive sleeve 25b (see FIG. 4) with respect to an axial displacement ΔL of the drive pin 30.

As shown in FIG. 1, the mirror finishing tool 10 is mounted on a tool post (not shown) of a lathe. A workpiece 3 is mounted on a spindle (not shown) of the lathe. The spindle is rotated. The tool post is then moved in the -X direction to press the mirror finishing tool 10 against the cylindrical surface of the workpiece 3. The depth of cut is, for example, 0.1 mm.

The spring 28 is then compressed, and the tool chip 31 and chip holder 27 retract together. As shown in FIG. 5A, the slide pin 29 slides in the axial direction within the slide groove 23d. The drive pin 30 also slides within the drive groove 25d. As shown in FIG. 5A, the drive groove 25d is inclined in a direction opposite to the first direction 2 as the drive pin 30 moves toward the proximal end. The drive pin 30 receives a force in the direction opposite to the first direction 2 from the drive groove 25d. As shown in FIGS. 1, 3, and 4, the drive pin 30 and the slide pin 29 are fixed to the chip holder 27. The slide pin 29 and the slide sleeve 23b thus receive a force in the direction opposite to the first direction 2. However, as the slide sleeve 23b is only rotatable in the first direction 2, the slide sleeve 23b does not rotate. The slide pin 29 and the chip holder 27 thus retreat without rotation. The drive sleeve 25b rotates by pressed from the drive pin 30.

As shown in FIG. 6, in cam diagram 41, the motion of the slide pin 29 and slide sleeve 23b is represented by a straight line from point 51 to point 52. During this time, the displacement angle Δθ1 of the slide sleeve 23b does not change. In cam diagram 43, the motion of the drive pin 30 and the drive sleeve 25b is represented by a straight line from point 55 to point 56. The displacement amount ΔL of the drive pin 30 is L1. During this time, the displacement angle Δθ2 of the drive sleeve 25b is θ1.

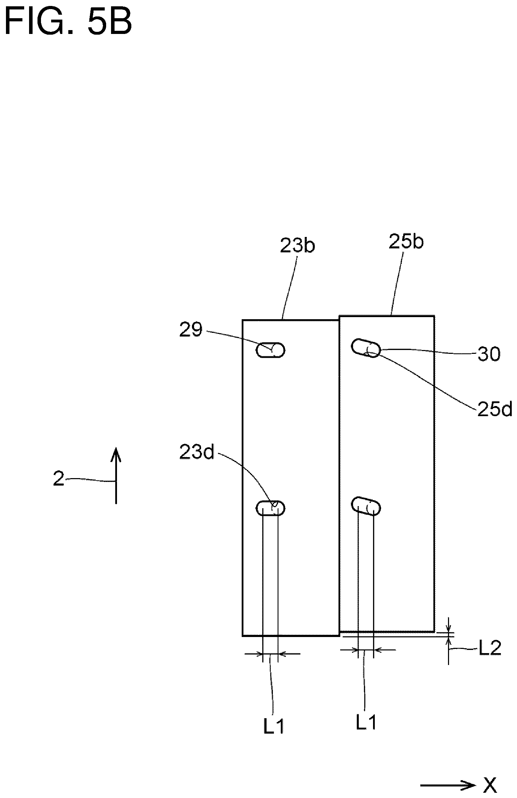

When the chip holder 27 has retracted to the rearward end 6, the slide pin 29 and the drive pin 30 retract. As shown in FIG. 5B, the drive sleeve 25b rotates by a circumferential distance L2. During this time, the slide sleeve 23b does not move.

Next, the tool post is fed at a constant feed rate in a spindle direction (Z direction). At this time, the spherical surface 31a is pressed against the surface of the workpiece 3 to perform burnishing. A thrust force F1 acting on the tool chip 31 is transmitted to the housing 19. The point of action of the thrust force F1 is a distal end of the tool chip 31. The direction of the thrust force F1 is the +X direction. The thrust force F1 is converted into a rotational force F2 via the knuckle pin 13 to be applied to the spring 17. The spring 17 supports the housing 19 against the force F2. The pressing force (reaction force of F1) of the spherical surface 31a is determined by an initial length of the spring 17. The amount of projection of the adjustment plug 15 adjusts the thrust force F1.

After completion of the machining, the tool post is moved in the +X direction to retract the mirror finishing tool 10 from the workpiece 3. Due to the elastic force of the spring 28, the tool chip 31 and the chip holder 27 advance together. At this time, as shown in FIG. 5B, the drive groove 25d receives a force in the direction opposite to the first direction 2. However, the drive sleeve 25b rotates only in the first direction 2. The drive pin 30 thus rotates along the drive groove 25d. The slide pin 29 and the chip holder 27 move integrally with the drive pin 30. As the slide pin 29 moves, the slide sleeve 23b rotates by an amount L2 in the first direction 2.

As shown in FIG. 6, in the cam diagram 41, the movement of the slide pin 29 is represented by a straight line from point 52 to point 53. The displacement ΔL of the slide pin 29 is -L1. The angular displacement Δθ1 of the slide pin 29 and the slide sleeve 23b is θ1. In the cam diagram 43, the movement of the drive sleeve 25b is represented by a straight line from point 56 to point 57. The angular displacement Δθ2 does not change.

As shown by the dashed lines in FIG. 6, during each mirror finishing operation, the chip holder 27 rotates incrementally with each machining cycle.

When the mirror finishing tool 10 according to the present embodiment is used repeatedly, as shown in FIG. 2, the contact area of the tool chip 31 shifts sequentially to positions 61a, 61b, 61c, and 61d at an interval of θ1 from the center. The contact area is the portion of the tool chip 31 that comes into contact with the workpiece 3. The contact areas 61a, 61b, 61c, ... are located on the spherical surface 31a. During mirror finishing, the contact area 61a is pressed into the workpiece 3 to receive a large compressive stress. If the same contact area 61a is used repeatedly, the tool chip 31 may be damaged due to repeated compressive stress. However, with the mirror finishing tool 10 according to the present embodiment, the contact areas 61a, 61b, 61c, ... shift with each operation, which reduces the likelihood of damage to the tool chip 31. As the tool chip 31 is made of a hard material such as diamond, the tool chip 31 is expensive. The mirror finishing tool 10 according to the present embodiment significantly reduces the machining cost (tool cost).

The mirror finishing tool disclosed in Patent Literature 1 uses only two positions, i.e., front and back, of the spherical surface of the distal end of the chip. Even when the chip reaches the end of its life, most of the spherical surface remains unused. In contrast, when the tool chip 31 according to the present embodiment reaches the end of its life, the entire circumference of the spherical surface 31a has been utilized. This saves material for the tool chip 31.

The present invention is not limited to the embodiment described above, and various modifications can be made without departing from the spirit of the invention. All technical matters described in the claims are within the scope of the present invention. The embodiment described above is merely an illustrative example. Those skilled in the art will be able to derive various alternatives, modifications, variations, or improvements from the disclosure of this specification, all of which fall within the technical scope of the appended claims.

### Reference Signs List

- 1: Central axis
- 2: First direction
- 10: Mirror finishing tool (Finishing tool)
- 19: Housing
- 19a: Holder chamber
- 23b: Slide sleeve
- 25b: Drive sleeve
- 27: Chip holder
- 31: Tool chip
- 31a: Spherical surface

## Claims

1. A finishing tool (10), comprising:
a housing (19) having a cylindrical holder chamber (19a) that opens toward a distal end and located along a central axis (1);
a tool chip (31) having a spherical surface (31a) at a distal end; and
a chip holder (27) the chip holder (27) reciprocable between a forward end (5) and a rearward end (6), the chip holder (27) capable of mounting the tool chip (31) at a distal end;
**characterized by** a slide sleeve (23b) disposed coaxially with the central axis (1) in the holder chamber (19a), the slide sleeve (23b) configured to rotate only in a first direction (2); a drive sleeve (25b) disposed coaxially with the central axis (1) in the holder chamber (19a), the drive sleeve (25b) configured to rotate only in the first direction (2); the chip holder (27) penetrating the slide sleeve (23b) and the drive sleeve (25b) and being axially slidable relative to the slide sleeve (23b), the chip holder (27) configured to rotate in the first direction (2) as the chip holder (27) moves forward relative to the drive sleeve (25b).

2. The finishing tool (10) according to claim 1, further comprising:
a first elastic member (28) disposes at a proximal end portion of the holder chamber (19a), the first elastic member (28) configured to urge the chip holder (27) toward a distal end.

3. The finishing tool (10) according to claim 1 or 2, wherein
the slide sleeve (23b) includes a slide groove (23d) located on an inner surface of the slide sleeve (23b), the slide groove (23d) extending parallel to the central axis (1),
the drive sleeve (25b) includes a drive groove (25d) located on an inner surface of the drive sleeve (25b), the drive groove (25d) extending in the first direction (2) as the drive groove (25d) advances toward a distal end,
the finishing tool (10) further comprising:
a slide link (29) inserted into the slide groove (23d); and
a drive link (30) inserted into the drive groove (25d).

4. The finishing tool (10) according to claim 3, wherein
the slide link (29) and the drive link (30) are pins.

5. The finishing tool (10) according to any one of claims 1 to 4, further comprising:
a first one-way clutch (23) including the slide sleeve (23b); and
a second one-way clutch (25) including the drive sleeve (25b).

6. The finishing tool (10) according to any one of claims 1 to 5, further comprising:
a bearing (22) disposed at a proximal end portion of the holder chamber (19a), the bearing (22) supporting the slide sleeve (23b) and the drive sleeve (25a) to the holder chamber (19a) so as to receive thrust load.

7. The finishing tool (10) according to any one of claims 1 to 6, wherein
the tool chip (31) is made of a hard material, and
the finishing tool (10) is a mirror finishing tool.

8. The finishing tool (10) according to any one of claims 1 to 7, further comprising:
a shank (11);
wherein
the housing (19) is swingably disposed on the shank (11),
the finishing tool (10) further comprising:
a second elastic member (17) extending perpendicular to the central axis (1), the second elastic member (17) configured to urge the housing (19) away from the shank (11).

## Patentansprüche

1. Schlichtwerkzeug (10), das aufweist:
ein Gehäuse (19) mit einer zylindrischen Halterkammer (19a), die sich zu einem distalen Ende hin öffnet und entlang einer Mittelachse (1) angeordnet ist;
einen Werkzeugschneideinsatz (31) mit einer kugelförmigen Oberfläche (31a) an einem distalen Ende; und
einen Schneideinsatzhalter (27), wobei der Schneideinsatzhalter (27) zwischen einem vorderen Ende (5) und einem hinteren Ende (6) hin- und herbeweglich ist und der Schneideinsatzhalter (27) imstande ist, den Werkzeugschneideinsatz (31) an einem distalen Ende aufzunehmen;
**gekennzeichnet durch** eine Gleithülse (23b), die koaxial mit der Mittelachse (1) in der Halterkammer (19a) angeordnet ist, wobei die Gleithülse (23b) konfiguriert ist, sich nur in einer ersten Richtung (2) zu drehen; eine Antriebshülse (25b), die koaxial mit der Mittelachse (1) in der Halterkammer (19a) angeordnet ist, wobei die Antriebshülse (25b) konfiguriert ist, sich nur in der ersten Richtung (2) zu drehen; wobei der Schneideinsatzhalter (27) die Gleithülse (23b) und die Antriebshülse (25b) durchdringt und relativ zur Gleithülse (23b) axial verschiebbar ist, wobei der Schneideinsatzhalter (27) konfiguriert ist, sich in der ersten Richtung (2) zu drehen, wenn sich der Schneideinsatzhalter (27) relativ zur Antriebshülse (25b) vorwärts bewegt.

2. Schlichtwerkzeug (10) nach Anspruch 1, das ferner aufweist:
ein erstes elastisches Element (28), das an einem proximalen Endabschnitt der Halterkammer (19a) angeordnet ist, wobei das erste elastische Element (28) konfiguriert ist, den Schneideinsatzhalter (27) zu einem distalen Ende zu drücken.

3. Schlichtwerkzeug (10) nach Anspruch 1 oder 2, wobei
die Gleithülse (23b) eine Gleitnut (23d) aufweist, die an einer Innenfläche der Gleithülse (23b) angeordnet ist, wobei sich die Gleitnut (23d) parallel zur Mittelachse (1) erstreckt,
die Antriebshülse (25b) eine Antriebsnut (25d) aufweist, die an einer Innenfläche der Antriebshülse (25b) angeordnet ist, wobei sich die Antriebsnut (25d) in der ersten Richtung (2) erstreckt, wenn sich die Antriebsnut (25d) einem distalen Ende nähert,
wobei das Schlichtwerkzeug (10) ferner aufweist:
ein Gleitglied (29), das in die Gleitnut (23d) eingesetzt ist; und
ein Antriebsglied (30), das in die Antriebsnut (25d) eingesetzt ist.

4. Schlichtwerkzeug (10) nach Anspruch 3, wobei
das Gleitglied (29) und das Antriebsglied (30) Stifte sind.

5. Schlichtwerkzeug (10) nach einem der Ansprüche 1 bis 4, das ferner aufweist:
eine erste Einwegkupplung (23), die die Gleithülse (23b) aufweist; und
eine zweite Einwegkupplung (25), die die Antriebshülse (25b) aufweist.

6. Schlichtwerkzeug (10) nach einem der Ansprüche 1 bis 5, das ferner aufweist:
ein Lager (22), das an einem proximalen Endabschnitt der Halterkammer (19a) angeordnet ist, wobei das Lager (22) die Gleithülse (23b) und die Antriebshülse (25a) an der Halterkammer (19a) stützt, um eine Axialkraft aufzunehmen.

7. Schlichtwerkzeug (10) nach einem der Ansprüche 1 bis 6, wobei
der Werkzeugschneideinsatz (31) aus einem harten Material besteht und das Schlichtwerkzeug (10) ein Spiegelglanz-Schlichtwerkzeug ist.

8. Schlichtwerkzeug (10) nach einem der Ansprüche 1 bis 7, das ferner aufweist:
einen Schaft (11);
wobei
das Gehäuse (19) schwenkbar am Schaft (11) angeordnet ist,
wobei das Schlichtwerkzeug (10) ferner aufweist:
ein zweites elastisches Element (17), das sich senkrecht zur Mittelachse (1) erstreckt, wobei das zweite elastische Element (17) konfiguriert ist, das Gehäuse (19) vom Schaft (11) wegzudrücken.

## Revendications

1. Outil de finition (10), comprenant :
un boîtier (19) comportant une chambre de logement (19a) cylindrique s'ouvrant vers une extrémité distale et située le long d'un axe central (1) ;
une plaquette d'outil (31) présentant une surface sphérique (31a) à son extrémité distale ; et
un porte-plaquette (27), le porte-plaquette (27) pouvant effectuer un mouvement de va-et-vient entre une extrémité avant (5) et une extrémité arrière (6), le porte-plaquette (27) étant capable de monter la plaquette d'outil (31) à son extrémité distale ;
**caractérisé par** un manchon coulissant (23b) disposé coaxialement à l'axe central (1) dans la chambre de logement (19a), le manchon coulissant (23b) étant configuré pour tourner uniquement dans un premier sens (2) ; un manchon d'entraînement (25b) disposé coaxialement à l'axe central (1) dans la chambre de logement (19a), le manchon d'entraînement (25b) étant configuré pour tourner uniquement dans le premier sens (2) ; le porte-plaquette (27) traversant le manchon coulissant (23b) et le manchon d'entraînement (25b) et pouvant coulisser axialement par rapport au manchon coulissant (23b), le porte-plaquette (27) étant configuré pour tourner dans le premier sens (2) lorsque le porte-plaquette (27) avance par rapport au manchon d'entraînement (25b).

2. Outil de finition (10) selon la revendication 1, comprenant en outre :
un premier élément élastique (28) disposé au niveau d'une partie d'extrémité proximale de la chambre de logement (19a), le premier élément élastique (28) étant configuré pour pousser le porte-plaquette (27) vers une extrémité distale.

3. Outil de finition (10) selon la revendication 1 ou 2, dans lequel
le manchon coulissant (23b) comprend une rainure de coulissement (23d) située sur une surface intérieure du manchon coulissant (23b), la rainure de coulissement (23d) s'étendant parallèlement à l'axe central (1),
le manchon d'entraînement (25b) comprend une rainure d'entraînement (25d) située sur une surface intérieure du manchon d'entraînement (25b), la rainure d'entraînement (25d) s'étendant dans le premier sens (2) à mesure que la rainure d'entraînement (25d) avance vers une extrémité distale,
l'outil de finition (10) comprenant en outre :
une biellette de coulissement (29) insérée dans la rainure de coulissement (23d) ; et
une biellette d'entraînement (30) insérée dans la rainure d'entraînement (25d).

4. Outil de finition (10) selon la revendication 3, dans lequel
la biellette de coulissement (29) et la biellette d'entraînement (30) sont des goupilles.

5. Outil de finition (10) selon l'une quelconque des revendications 1 à 4, comprenant en outre :
un premier embrayage unidirectionnel (23) comprenant le manchon coulissant (23b) ; et
un deuxième embrayage unidirectionnel (25) comprenant le manchon d'entraînement (25b).

6. Outil de finition (10) selon l'une quelconque des revendications 1 à 5, comprenant en outre :
un palier (22) disposé au niveau d'une partie d'extrémité proximale de la chambre de logement (19a), le palier (22) supportant le manchon coulissant (23b) et le manchon d'entraînement (25a) par rapport à la chambre de logement (19a) de manière à absorber une charge axiale.

7. Outil de finition (10) selon l'une quelconque des revendications 1 à 6, dans lequel la plaquette d'outil (31) est réalisée en un matériau dur, et
l'outil de finition (10) est un outil de finition par miroir.

8. Outil de finition (10) selon l'une quelconque des revendications 1 à 7, comprenant en outre :
une tige (11) ;
dans lequel
le boîtier (19) est monté de manière pivotante sur la tige (11),
l'outil de finition (10) comprenant en outre :
un deuxième élément élastique (17) s'étendant perpendiculairement à l'axe central (1), le deuxième élément élastique (17) étant configuré pour écarter le boîtier (19) de la tige (11).
